# EUROPÄISCHE PATENTSCHRIFT

(11) **EP 2 766 210 B1**
(45) Veröffentlichungstag und Bekanntmachung des Hinweises auf die Patenterteilung: **19.08.2020**
(21) Anmeldenummer: 12783503.1
(22) Anmeldetag: 09.10.2012
(51) Int. Cl.: B60K 37/06, G06F 3/01

(54) **VERFAHREN ZUM BEREITSTELLEN EINER BEDIENVORRICHTUNG IN EINEM FAHRZEUG UND BEDIENVORRICHTUNG**
METHOD FOR PROVIDING AN OPERATING DEVICE IN A VEHICLE AND OPERATING DEVICE
PROCÉDÉ DE MISE À DISPOSITION D'UN DISPOSITIF DE COMMANDE D'UTILISATEUR DANS UN VÉHICULE ET DISPOSITIF DE COMMANDE D'UTILISATEUR

(30) Priorität: 15.10.2011 DE 102011116122
(43) Veröffentlichungstag der Anmeldung: 20.08.2014
(73) Patentinhaber: Volkswagen Aktiengesellschaft, 38440 Wolfsburg (DE)
(72) Erfinder: DEHMANN, Rainer, 10961 Berlin (DE); HAUSCHILD, Frank, 12159 Berlin (DE); PETERSEN, Sönke, 12205 Berlin (DE); KUHN, Mathias, 14129 Berlin (DE)
(86) Internationale Anmeldenummer: PCT/EP2012/004231
(87) Internationale Veröffentlichungsnummer: WO 2013/053465

(56) Entgegenhaltungen:
- EP-A1- 1 408 443
- DE-A1-102006 037 156
- JP-A- 2001 216 069
- US-A1- 2011 080 490

## Beschreibung

Die vorliegende Erfindung betrifft ein Verfahren zum Bereitstellen einer Bedienvorrichtung in einem Fahrzeug. Bei dem Verfahren werden von einer Steuervorrichtung Grafikdaten erzeugt, die eine Anzeigefläche so ansteuern, dass ein graphisches Objekt zu einer ausgeführten Anwendung angezeigt wird. Ferner wird die geometrische Struktur eines Betätigungsobjekts in einem Detektionsraum vor der Anzeigefläche erfasst und in Abhängigkeit von der erfassten Struktur ein Steuersignal für eine Steuerung der ausgeführten Anwendung erzeugt. Ferner betrifft die Erfindung eine Bedienvorrichtung für ein Fahrzeug. Die Bedienvorrichtung umfasst eine Anzeigevorrichtung mit einer Anzeigefläche und eine Steuervorrichtung, die mit der Anzeigevorrichtung gekoppelt ist und mittels derer Grafikdaten zum Anzeigen eines graphischen Objekts zu einer ausgeführten Anwendung erzeugbar sind. Ferner umfasst die Bedienvorrichtung eine Gestenerfassungseinrichtung zum Erfassen der geometrischen Struktur eines Betätigungsobjekts in einem Detektionsraum vor der Anzeigefläche.

Mit der Zunahme elektronischer Einrichtungen im Fahrzeug wurde es erforderlich, eine größere Informationsmenge im Fahrzeug darzustellen. Moderne Fahrzeuge umfassen beispielsweise neben einer Multifunktionsanzeige eine Vielzahl von Fahrerassistenzsystemen, deren Informationen im Fahrzeug angezeigt werden müssen. Des Weiteren umfassen Fahrzeuge häufig ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Für die Anzeige von Information in einem Fahrzeug ergeben sich sehr spezielle Anforderungen. Die Informationsaufnahme erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, sodass er für die Informationsaufnahme nur sehr kurzzeitig den Blick vom Fahrgeschehen abwenden muss. Wird die Bedienung der Fahrzeugeinrichtungen von einer Anzeige unterstützt oder geführt, sollte die Anzeige so erfolgen, dass der Fahrer für die Bedienung die Anzeige nur sehr kurz oder überhaupt nicht betrachten muss, um die Bedienung durchzuführen.

Aus der WO 2011/003947 A1 ist ein Verfahren und eine Vorrichtung zum Bereitstellen einer Benutzerschnittstelle in einem Fahrzeug bekannt. Die Vorrichtung umfasst eine Gestenerfassungseinrichtung zum Erfassen von Gesten in einem Erfassungsraum, der vor einer Anzeigefläche angeordnet ist. Ferner umfasst die Vorrichtung eine Analyseeinrichtung, mit welcher die erfassten Gesten Bedienobjekten oder Anzeigeobjekten und einem Steuerbefehl zugeordnet werden können. Mittels einer Steuervorrichtung ist der Steuerbefehl dann ausführbar.

Das Dokument DE 10 2006 037156 A1 wird als nächstliegende Stand der Technik erachtet.

Der vorliegenden Erfindung liegt die Aufgabe zugrunde, ein Verfahren und eine Bedienvorrichtung der eingangs genannten Art bereitzustellen, bei welchen die ausgeführte Anwendung schnell und intuitiv gesteuert werden kann.

Erfindungsgemäß wird diese Aufgabe durch ein Verfahren mit den Merkmalen des Anspruchs 1 und eine Bedienvorrichtung mit den Merkmalen des Anspruchs 3 gelöst. Vorteilhafte

Ausgestaltungen und Weiterbildungen ergeben sich aus den abhängigen Ansprüchen.

Das erfindungsgemäße Verfahren ist dadurch gekennzeichnet, dass mittels der Steuervorrichtung ein Steuersignal zum Anhalten der ausgeführten Anwendung erzeugt wird, wenn eine geometrische Struktur des Betätigungsobjekts in dem Detektionsraum erfasst wurde, bei der eine im Wesentlichen ebene Fläche des Betätigungsobjekts, die im Wesentlichen parallel zur Anzeigefläche ausgerichtet ist, beabstandet von der Anzeigefläche angeordnet ist.

Bei dem Betätigungsobjekt, welches bei dem erfindungsgemäßen Verfahren verwendet wird, kann es sich insbesondere um die Hand eines Nutzers, insbesondere die Hand des Fahrers des Fahrzeugs handeln. Bei dem erfindungsgemäßen Verfahren wird somit mittels der Steuervorrichtung die ausgeführte Anwendung insbesondere dann angehalten, wenn erfasst wurde, dass die Handfläche der Hand im Wesentlichen parallel zur Anzeigefläche zeigt. Bei dem erfindungsgemäßen Verfahren kann der Nutzer, d.h. insbesondere der Fahrer des Fahrzeugs, intuitiv und schnell eine momentan ausgeführte Anwendung anhalten, indem er seine Hand in den Detektionsraum bewegt und seine Handfläche parallel zur Anzeigefläche ausrichtet. Auf diese Weise kann der Fahrer eine sogenannte Stop-Geste ausführen. Dabei ist es vorteilhafterweise nicht erforderlich, dass der Fahrer seinen Blick vom Fahrgeschehen abwendet. Auf diese Weise leistet das erfindungsgemäße Verfahren einen Beitrag zum sicheren Führen des Fahrzeugs.

Unter einer im Wesentlichen parallelen Ausrichtung zur Anzeigefläche wird im Sinne der Erfindung verstanden, dass ein gewisser Toleranzbereich für die Ausrichtung der Fläche umfasst ist. Insbesondere wenn es sich bei dem Betätigungsobjekt um die Hand eines Nutzers handelt, wird die Handfläche der geöffneten Hand als ebene Fläche betrachtet, da die geöffnete Hand im Vergleich z.B. zu der geometrischen Struktur einer Faust auf der Innenseite der Hand eine im Wesentlichen ebene Fläche bildet. Diese ebene Fläche der geöffneten Handfläche ist insbesondere im Wesentlichen parallel zur Anzeigefläche, wenn die Abweichung von der exakt parallelen Ausrichtung zur Anzeigefläche geringer als +/-20° ist, insbesondere geringer als +/-10° ist. Dabei wird insbesondere eine Unterscheidung zu einer geöffneten Hand erfasst, die im Wesentlichen senkrecht zu der Anzeigefläche ausgerichtet ist.

Gemäß einer Ausgestaltung des erfindungsgemäßen Verfahrens betrifft die Anwendung die Wiedergabe von Sprach- und/oder Musikdateien, bei der eine akustische Ausgabe über einen Lautsprecher und/oder einen Kopfhörer erzeugt wird. Wenn in diesem Fall eine geometrische Struktur des Betätigungsobjekts in dem Detektionsraum erfasst wurde, bei der eine im Wesentlichen ebene Fläche des Betätigungsobjekts, die im Wesentlichen parallel zur Anzeigefläche ausgerichtet ist, beabstandet von der Anzeigefläche angeordnet ist, wird gemäß einer Ausgestaltung ein Steuersignal zum Anhalten der Wiedergabe der Sprach- und/oder Musikdateien erzeugt. Gemäß einer anderen Ausgestaltung wird ein Steuersignal zum Stummschalten der akustischen Ausgabe über den Lautsprecher und/oder den Kopfhörer erzeugt. Im letzteren Fall läuft die Wiedergabe weiter, es erfolgt jedoch keine akustische Ausgabe.

In bestimmten Fahrsituationen ist es für den Fahrer des Fahrzeugs wichtig, dass er sehr schnell die Wiedergabe oder die akustische Ausgabe einer Musik- oder Sprachdatei anhält. Bei dem erfindungsgemäßen Verfahren kann der Fahrer durch die vorstehend beschriebene schnelle Stop-Geste die Wiedergabe oder die akustische Ausgabe auf sehr intuitive Weise schnell anhalten.

Gemäß einer Weiterbildung des erfindungsgemäßen Verfahrens wird das Steuersignal zum Anhalten der ausgeführten Anwendung erzeugt, wenn für ein vorab definiertes Zeitintervall eine geometrische Struktur des Betätigungsobjekts in dem Detektionsraum erfasst wurde, bei der eine im Wesentlichen ebene Fläche des Betätigungsobjekts, die im Wesentlichen parallel zur Anzeigefläche ausgerichtet ist, beabstandet von der Anzeigefläche angeordnet ist. Durch diese Ausgestaltung wird verhindert, dass eine kurze, zufällige Anordnung der geöffneten Hand, die parallel zur Anzeigefläche ausgerichtet ist, bereits zum Anhalten der Anwendung ausreicht. Der Nutzer muss z.B. seine geöffnete Hand für ein gewisses Zeitintervall, z. B. mindestens 1 s oder mindestens 3 s, vor die Anzeigefläche halten, um die Anwendung anzuhalten. Hierdurch wird die Bediensicherheit erhöht und es werden Fehlbedienungen vermieden.

Die erfindungsgemäße Bedienvorrichtung ist dadurch gekennzeichnet, dass mittels der Steuervorrichtung ein Steuersignal zum Anhalten der ausgeführten Anwendung erzeugbar ist, wenn von der Gestenerfassungseinrichtung eine geometrische Struktur des Betätigungsobjekts in dem Detektionsraum erfasst wurde, bei der eine im Wesentlichen ebene Fläche des Betätigungsobjekts, die im Wesentlichen parallel zur Anzeigefläche ausgerichtet ist, beabstandet von der Anzeigefläche angeordnet ist.

Die erfindungsgemäße Bedienvorrichtung ist insbesondere so ausgebildet, dass sie die vorstehend genannten Verfahrensschritte teilweise oder vollständig ausführen kann. Mittels der Bedienvorrichtung können verschiedene Einrichtungen des Fahrzeugs bedient werden. Die erfindungsgemäße Bedienvorrichtung weist dieselben vorstehend genannten Vorteile wie das erfindungsgemäße Verfahren auf.

Des Weiteren betrifft die Erfindung ein Fahrzeug mit der erfindungsgemäßen Bedienvorrichtung. Der Detektionsraum ist in diesem Fall so angeordnet, dass er gut von dem Fahrer und/oder dem Beifahrer erreicht werden kann.

Die Erfindung wird nun anhand eines Ausführungsbeispiels mit Bezug zu den Zeichnungen erläutert.
- Figur 1: zeigt ein Fahrzeug mit dem Ausführungsbeispiel der erfindungsgemäßen Bedienvorrichtung,
- Figur 2: zeigt schematisch ein Ausführungsbeispiel der erfindungsgemäßen Bedienvorrichtung und die Verbindung dieser Bedienvorrichtung mit anderen Einrichtungen des Fahrzeugs,
- Figur 3: zeigt eine Schnittansicht der Anzeigevorrichtung des Ausführungsbeispiels der erfindungsgemäßen Bedienvorrichtung, und
- Figur 4: zeigt eine von einem Nutzer vor der Anzeigefläche ausgeführte Stop-Geste.

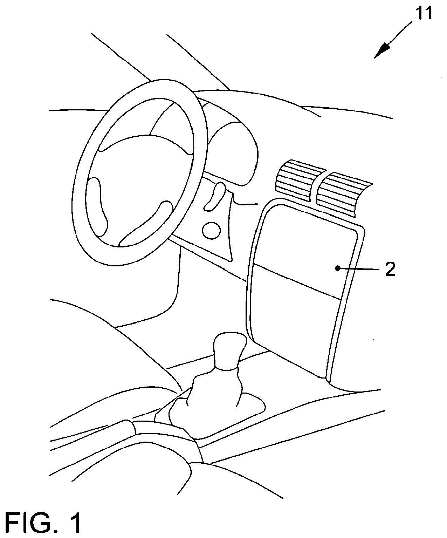

Mit Bezug zu den Figuren 1 bis 3 wird zunächst ein Ausführungsbeispiel der erfindungsgemäßen Bedienvorrichtung 6 und dessen Anordnung in einem Fahrzeug 11 erläutert:
Die Bedienvorrichtung 6 umfasst eine Anzeigevorrichtung 1 mit einer Anzeigefläche 2, die so im Innenraum des Fahrzeugs 11 angeordnet ist, dass sie für zumindest einen Fahrzeuginsassen, insbesondere den Fahrer, gut sichtbar ist. Die Anzeigefläche 2 kann von einem Display, insbesondere einem Flüssigkeitskristalldisplay, beliebiger Bauart bereitgestellt werden.

Die Bedienvorrichtung 6 umfasst ferner eine Steuervorrichtung 3 und eine Eingabevorrichtung. Die Steuervorrichtung 3 ist mit der Anzeigevorrichtung 1 verbunden, mit welcher Graphikdaten zur Informationsdarstellung auf der Anzeigefläche 2 erzeugbar sind. Die Eingabevorrichtung umfasst eine berührungsempfindliche Oberfläche 4, die auf der Anzeigefläche 2 ausgebildet ist. Es wird somit ein sogenannter Touchscreen bereitgestellt.

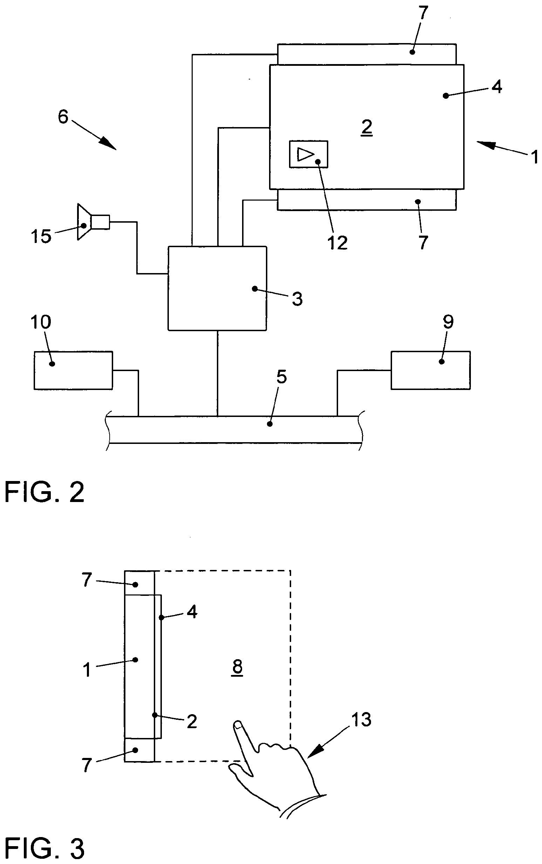

Des Weiteren umfasst die Eingabevorrichtung eine Gestenerfassungseinrichtung 7. Mit der Gestenerfassungseinrichtung 7 können Gesten eines Nutzers in einem Detektionsraum 8 erfasst werden. Der Detektionsraum 8 ist vor der Anzeigefläche 2 ausgebildet, wie es in Figur 3 im Detail dargestellt ist. Der Nutzer kann mit einem Betätigungsobjekt, im vorliegenden Fall mit seiner Hand 13, Gesten im Detektionsraum 8 ausführen. Die Gesten werden von der Gestenerfassungseinrichtung 7 erfasst und es werden nach einer Analyse der Gesten Steuersignale von der Gestenerfassungseinrichtung 7 an die Steuervorrichtung 3 übertragen.

Unter einer *Geste* wird im Sinne der Erfindung eine bestimmte Stellung oder Haltung der Hand eines Nutzers oder eine bestimmte Bewegung, die mit der Hand des Nutzers ausgeführt wird, verstanden. Dabei wird die geometrische Struktur der Hand in dem Detektionsraum erfasst. Die Gesten werden im Detektionsraum 8 vor der Anzeigefläche 2 ausgeführt, ohne dass eine Berührung der Anzeigefläche erforderlich ist.

Die Gestenerfassungseinrichtung 7 kann z.B. Infrarotlichtquellen und Infrarotlichtdetektoren umfassen. Alternativ kann sie ein optisches System mit einer Kamera umfassen, welche die im Detektionsraum 8 ausgeführte Geste aufnimmt. Eine derartige Gestenerfassungseinrichtung 7 ist an sich bekannt. Ein Beispiel einer solchen Gestenerfassungseinrichtung, wie sie bei der vorliegenden Erfindung eingesetzt werden kann, ist in der WO 2011/003947 A1 beschrieben.

Außerdem ist die Steuervorrichtung 3 mit einem Datenbus 5 gekoppelt. Über diesen Datenbus 5 ist die Steuervorrichtung 3 mit weiteren Einrichtungen 9, 10 des Fahrzeugs 11 verbunden, zu denen Informationen auf der Anzeigefläche 2 angezeigt werden sollen und die mittels der Bedienvorrichtung 6 bedient werden sollen. Mittels Bedienvorrichtung 6 und durch das Verfahren können den Fahrzeuginsassen Informationen angezeigt werden. Ferner können die Fahrzeuginsassen mittels der Bedienvorrichtung 6 Einrichtungen 9, 10 des Fahrzeugs 11 bedienen und die Anzeige steuern.

Schließlich ist die Steuervorrichtung 3 mit einem Lautsprecher 15 gekoppelt, mittels welchem eine akustische Ausgabe erzeugt werden kann.

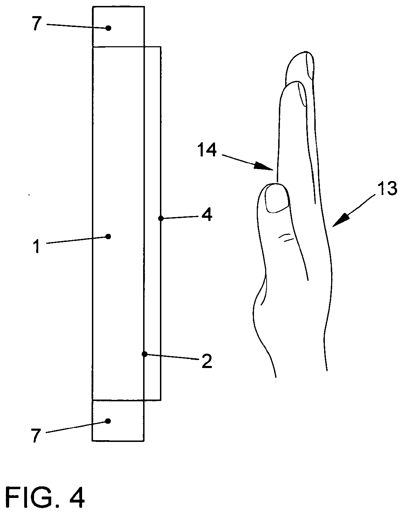

Im Folgenden wird ein Ausführungsbeispiel des erfindungsgemäßen Verfahrens, welches von der vorstehend beschriebenen Bedienvorrichtung 6 ausführbar ist, mit Bezug zu Fig. 4 im Detail erläutert:
Es wird im Folgenden davon ausgegangen, dass es sich bei der Einrichtung 9 um ein Wiedergabegerät für Musik- und/oder Sprachdateien handelt. Die Einrichtung 9 ist z.B. ein sogenannter MP3-Player. Es wird eine bestimmte Musikdatei momentan wiedergegeben. Die Steuervorrichtung 3 erzeugt eine zugehörige akustische Ausgabe über einen Lautsprecher 15. Außerdem wird mittels der Steuervorrichtung 3 auf der Anzeigefläche 2 ein graphisches Objekt 12 angezeigt, welches dem momentan abgespielten Musikstück zugeordnet ist. Dieses graphische Objekt 12 ist in Figur 2 nur schematisch dargestellt. Es können beispielsweise umfassende Schaltflächen zur Steuerung der Wiedergabe des Musikstücks und Informationen zu dem Musikstück, wie ein CD-Cover, dargestellt werden.

Um die Wiedergabe des Musikstücks anzuhalten, oder um alternativ den Lautsprecher 15 mittels der Steuervorrichtung 3 stumm zu schalten, bewegt z.B. der Fahrer des Fahrzeugs 11 seine Hand 13 in den Detektionsraum 8. Bereits das Eintreten der Hand 13 in den Detektionsraum 8 kann von der Gestenerfassungseinrichtung 11 erfasst werden, woraufhin die Anzeige auf der Anzeigefläche 2 von einem Anzeigezustand in einen sogenannten Bedienzustand wechselt, bei welchem betätigbare Schaltflächen auf andere Weise angezeigt werden, als im Anzeigezustand.

Der Nutzer öffnet nun seine Hand 13, sodass eine Handfläche 14 entsteht, die im Wesentlichen eben ist. Diese Handfläche 14 richtet der Nutzer so aus, dass sie im Wesentlichen parallel zu der Anzeigefläche 2 ist. Wird diese geometrische Struktur der Hand 13 des Nutzers für ein in der Steuervorrichtung 3 gespeichertes Zeitintervall von z. B. 1 s von der Gestenerfassungseinrichtung 7 erfasst, interpretiert die Steuervorrichtung 3 die erfasste Geste als sogenannte Stop-Geste. Die Steuervorrichtung 3 hält daraufhin die Wiedergabe der Musikdatei durch die Einrichtung 9 an oder schaltet alternativ die akustische Ausgabe über den Lautsprecher 15 auf stumm.

Der Nutzer bewegt daraufhin seine Hand 13 wieder aus dem Detektionsraum 8 heraus. Die Anzeige auf der Anzeigefläche 2 wechselt nun wieder von dem Bedienzustand in den Anzeigezustand. Will der Nutzer die Wiedergabe der Musikdatei wieder starten, oder die Stummschaltung des Lautsprechers 15 aufheben, kann er seine Hand 13 wieder in den Detektionsraum 8 bewegen. Die Anzeige auf der Anzeigefläche 2 wechselt daraufhin wieder vom Anzeigezustand in den Bedienzustand. Der Nutzer kann nun beispielsweise die berührungsempfindliche Oberfläche 4 bei einer Position betätigen, bei welcher auf der Anzeigefläche 2 eine entsprechende Schaltfläche angezeigt wird, welche einem Steuerbefehl zum Beginnen der Wiedergabe des Musikstücks oder zum Aufheben der Stummschaltung des Lautsprechers 15 zugeordnet ist.

### Bezugszeichenliste

- 1: Anzeigevorrichtung
- 2: Anzeigefläche
- 3: Steuervorrichtung
- 4: berührungsempfindliche Oberfläche
- 5: Datenbus
- 6: Bedienvorrichtung
- 7: Gestenerfassungseinrichtung
- 8: Detektionsraum
- 9: Einrichtung des Fahrzeugs
- 10: Einrichtung des Fahrzeugs
- 11: Fahrzeug
- 12: graphisches Objekt
- 13: Betätigungsobjekt, Hand eines Nutzers
- 14: Handfläche
- 15: Lautsprecher

## Patentansprüche

1. Verfahren zum Bereitstellen einer Bedienvorrichtung (6) in einem Fahrzeug (11), bei dem
- von einer Steuervorrichtung (3) Grafikdaten erzeugt werden, die eine Anzeigefläche (2) so ansteuern, dass ein graphisches Objekt (12) zu einer ausgeführten Anwendung angezeigt wird, und
- die geometrische Struktur eines Betätigungsobjekts (13) in einem Detektionsraum (8) vor der Anzeigefläche (2) erfasst wird und in Abhängigkeit von der erfassten Struktur ein Steuersignal für eine Steuerung der Wiedergabe der Sprach- und/oder Musikdatei erzeugt wird, wobei
mittels der Steuervorrichtung (3) ein Steuersignal zum Anhalten der Wiedergabe der Sprach- und/oder Musikdatei oder zum Stummschalten der akustischen Ausgabe über den Lautsprecher (15) und/oder den Kopfhörer erzeugt wird, wenn eine geometrische Struktur des Betätigungsobjekts (13) in dem Detektionsraum (8) erfasst wurde, bei der eine im Wesentlichen ebene Fläche (14) des Betätigungsobjekts (13), die im Wesentlichen parallel zur Anzeigefläche (2) ausgerichtet ist, beabstandet von der Anzeigefläche (2) angeordnet ist,
**dadurch gekennzeichnet, dass**
- die Anwendung die Wiedergabe von Sprach- und/oder Musikdateien betrifft, bei der eine akustische Ausgabe über einen Lautsprecher (15) und/oder einen Kopfhörer erzeugt wird, und
- das Steuersignal zum Anhalten der Wiedergabe der Sprach- und/oder Musikdatei oder zum Stummschalten der akustischen Ausgabe über den Lautsprecher (15) und/oder den Kopfhörer erzeugt wird, wenn für ein vorab definiertes Zeitintervall die geometrische Struktur des Betätigungsobjekts (13) in dem Detektionsraum (8) erfasst wurde, bei der eine im Wesentlichen ebene Fläche (14) des Betätigungsobjekts (13), die im Wesentlichen parallel zur Anzeigefläche (2) ausgerichtet ist, beabstandet von der Anzeigefläche (2) angeordnet ist.

2. Verfahren nach Anspruch 1,
**dadurch gekennzeichnet,**
**dass** das Betätigungsobjekt die Hand (13) eines Nutzers ist und mittels der Steuervorrichtung (3) die ausgeführte Anwendung angehalten wird, wenn erfasst wurde, dass die Handfläche (14) der Hand (13) im Wesentlichen parallel zur Anzeigefläche (2) zeigt.

3. Bedienvorrichtung (6) für ein Fahrzeug (11) mit
- einer Anzeigevorrichtung (1) mit einer Anzeigefläche (2),
- einer Steuervorrichtung (3), die mit der Anzeigevorrichtung (1) gekoppelt ist und mittels derer Graphikdaten zum Anzeigen eines graphischen Objekts (12) zu einer ausgeführten Anwendung erzeugbar sind, und
- einer Gestenerfassungseinrichtung (7) zum Erfassen der geometrischen Struktur eines Betätigungsobjekts (13) in einem Detektionsraum (8) vor der Anzeigefläche (2), wobei
- mittels der Steuervorrichtung (3) ein Steuersignal zum Anhalten der Wiedergabe der Sprach- und/oder Musikdatei oder zum Stummschalten der akustischen Ausgabe über den Lautsprecher (15) und/oder den Kopfhörer erzeugbar ist, wenn von der Gestenerfassungseinrichtung (7) eine geometrische Struktur des Betätigungsobjekts (13) in dem Detektionsraum (8) erfasst wurde, bei der eine im Wesentlichen ebene Fläche (14) des Betätigungsobjekts (13), die im Wesentlichen parallel zur Anzeigefläche (2) ausgerichtet ist, beabstandet von der Anzeigefläche (2) angeordnet ist,
**dadurch gekennzeichnet, dass**
- die Anwendung die Wiedergabe von Sprach- und/oder Musikdateien betrifft, bei der eine akustische Ausgabe über einen Lautsprecher (15) und/oder einen Kopfhörer erzeugt wird, und
- das Steuersignal zum Anhalten der ausgeführten Anwendung erzeugbar ist, wenn für ein vorab definiertes Zeitintervall die geometrische Struktur des Betätigungsobjekts (13) in dem Detektionsraum (8) erfasst wurde, bei der eine im Wesentlichen ebene Fläche (14) des Betätigungsobjekts (13), die im Wesentlichen parallel zur Anzeigefläche (2) ausgerichtet ist, beabstandet von der Anzeigefläche (2) angeordnet ist.

4. Fahrzeug (11) mit einer Bedienvorrichtung (6) nach Anspruch 3.

## Claims

1. Method for providing an operating device (6) in a vehicle (11), in which
- graphic data are generated by a control device (3) and drive a display surface (2) in such a way that a graphic object (12) for an executed application is displayed,
and
- the geometric structure of an operation object (13) is detected in a detection space (8) in front of the display surface (2), and depending on the detected structure, a control signal is generated for controlling the playback of the voice and/or music file, wherein
by means of the control device (3), a control signal to stop playback of the voice and/or music file or to mute the acoustic output via the speaker (15) and/or the headset is generated if a geometric structure of the operation object (13) in which a substantially flat surface (14) of the operation object (13) is aligned substantially in parallel to the display surface (2) and is arranged spaced apart from said display surface (2) has been detected in the detection space (8),
**characterized in that**
- the application relates to the playback of voice and/or music files in which an acoustic output is generated via a speaker (15) and/or a headset, and
- the control signal to stop playback of the voice and/or music file or to mute the acoustic output via the speaker (15) and/or the headset is generated if the geometric structure of the operation object (13) in which a substantially flat surface (14) of the operation object (13) is aligned substantially in parallel to the display surface (2) and is arranged spaced apart from said display surface (2) has been detected in the detection space (8) for a predefined time interval.

2. Method according to Claim 1,
**characterized in that**
the operation object is the hand (13) of a user, and the executed application is stopped by means of the control device (3) if it has been detected that the palm (14) of the hand (13) is oriented substantially in parallel to the display surface (2).

3. Operating device (6) for a vehicle (11), having
- a display device (1) having a display surface (2),
- a control device (3) that is coupled to the display device (1) and by means of which graphic data can be generated for displaying a graphic object (12) for an executed application,
and
- a gesture detection device (7) for detecting the geometric structure of an operation object (13) in a detection space (8) in front of the display surface (2), wherein
- by means of the control device (3), a control signal to stop playback of the voice and/or music file or to mute the acoustic output via the speaker (15) and/or the headset can be generated if a geometric structure of the operation object (13) in which a substantially flat surface (14) of the operation object (13) is aligned substantially in parallel to the display surface (2) and is arranged spaced apart from said display surface (2) has been detected in the detection space (8) by the gesture detection device (7),
**characterized in that**
- the application relates to the playback of voice and/or music files in which an acoustic output is generated via a speaker (15) and/or a headset, and
- the control signal to stop the executed application can be generated if the geometric structure of the operation object (13) in which a substantially flat surface (14) of the operation object (13) is aligned substantially in parallel to the display surface (2) and is arranged spaced apart from said display surface (2) has been detected in the detection space (8) for a predefined time interval.

4. Vehicle (11) having an operating device (6) according to Claim 3.

## Revendications

1. Procédé de mise à disposition d'un dispositif d'utilisation (6) dans un véhicule (11) dans lequel
- des données graphiques sont générées par un dispositif de commande (3), lesquelles données commandent une surface d'affichage (2) de telle sorte qu'un objet graphique (12) relatif à une application exécutée est affiché,
et
- la structure géométrique d'un objet d'actionnement (13) est détectée dans un espace de détection (8) devant la surface d'affichage (2) et, en fonction de la structure détectée, un signal de commande pour une commande de lecture de fichiers vocaux et/ou musicaux est généré,
un signal de commande pour l'arrêt de la lecture des fichiers vocaux et/ou musicaux ou pour la mise en sourdine de la sortie acoustique via le haut-parleur (15) et/ou l'écouteur étant généré au moyen du dispositif de commande (3) lorsqu'une structure géométrique de l'objet d'actionnement (13) a été détectée dans l'espace de détection (8), dans laquelle une surface (14) sensiblement plane de l'objet d'actionnement (13), qui est orientée de manière sensiblement parallèle à la surface d'affichage (2), est disposée à une certaine distance de la surface d'affichage (2),
**caractérisé en ce que**
- l'application concerne la lecture de fichiers vocaux et/ou musicaux, dans laquelle une sortie acoustique est générée via un haut-parleur (15) et/ou un écouteur, et
- le signal de commande pour l'arrêt de la lecture des fichiers vocaux et/ou musicaux ou pour la mise en sourdine de la sortie acoustique via le haut-parleur (15) et/ou l'écouteur est généré lorsque la structure géométrique de l'objet d'actionnement (13) a été détectée dans l'espace de détection (8) pendant une période de temps définie au préalable, dans laquelle une surface (14) sensiblement plane de l'objet d'actionnement (13), qui est orientée de manière sensiblement parallèle à la surface d'affichage (2), est disposée à une certaine distance de la surface d'affichage (2).

2. Procédé selon la revendication 1,
**caractérisé en ce**
**que** l'objet d'actionnement est la main (13) d'un utilisateur et l'application exécutée est arrêtée au moyen du dispositif de commande (3) lorsqu'il a été détecté que la surface (14) de la main (13) est sensiblement parallèle à la surface d'affichage (2).

3. Dispositif d'utilisation (6) pour un véhicule (11), comprenant
- un dispositif d'affichage (1) pourvu d'une surface d'affichage (2),
- un dispositif de commande (3) qui est couplé au dispositif d'affichage (1) et qui permet de générer des données graphiques pour afficher un objet graphique (12) concernant une application exécutée,
et
- un dispositif de détection de gestes (7) pour détecter la structure géométrique d'un objet d'actionnement (13) dans un espace de détection (8) devant la surface d'affichage (2),
- un signal de commande pour l'arrêt de la lecture des fichiers vocaux et/ou musicaux ou pour la mise en sourdine de la sortie acoustique via le haut-parleur (15) et/ou l'écouteur pouvant être généré au moyen du dispositif de commande (3) lorsqu'une structure géométrique de l'objet d'actionnement (13) a été détectée dans l'espace de détection (8) par le dispositif de détection de gestes (7), dans laquelle une surface (14) sensiblement plane de l'objet d'actionnement (13), qui est orientée de manière sensiblement parallèle à la surface d'affichage (2), est disposée à une certaine distance de la surface d'affichage (2),
**caractérisé en ce que**
- l'application concerne la lecture de fichiers vocaux et/ou musicaux, dans laquelle une sortie acoustique est générée via un haut-parleur (15) et/ou un écouteur, et
- le signal de commande pour l'arrêt de l'application exécutée peut être généré lorsque la structure géométrique de l'objet d'actionnement (13) a été détectée dans l'espace de détection (8) pendant une période de temps définie au préalable, dans laquelle une surface (14) sensiblement plane de l'objet d'actionnement (13), qui est orientée de manière sensiblement parallèle à la surface d'affichage (2), est disposée à une certaine distance de la surface d'affichage (2).

4. Véhicule (11) comprenant un dispositif d'utilisation (6) selon la revendication 3.
